# EUROPÄISCHE PATENTSCHRIFT

(11) **EP 2 703 259 B1**
(45) Veröffentlichungstag und Bekanntmachung des Hinweises auf die Patenterteilung: **10.05.2017**
(21) Anmeldenummer: 13001383.2
(22) Anmeldetag: 18.03.2013
(51) Int. Cl.: B62D 33/07

(54) **Arretiervorrichtung zum Verriegeln und Entriegeln einer kippbaren Kabine für ein Nutzfahrzeug**
Latching device for locking and unlocking the tiltable cabin of a utility vehicle
Dispositif d'arrêt pour le verrouillage et le déverrouillage d'une cabine basculante d'un véhicule utilitaire

(30) Priorität: 01.09.2012 DE 102012017385
(43) Veröffentlichungstag der Anmeldung: 05.03.2014
(73) Patentinhaber: MAN Truck & Bus AG, 80995 München (DE)
(72) Erfinder: Schönegger-Fösleitner, Erich, 8933 St.Gallen (AT); Exner, Markus, 80997 München (DE); Oswald, Hermann, 85258 Weichs (DE)
(74) Vertreter: v. Bezold & Partner Patentanwälte - PartG mbB

(56) Entgegenhaltungen:
- GB-A- 1 392 574
- US-A- 4 413 696

## Beschreibung

Die Erfindung betrifft eine Arretiervorrichtung zum Verriegeln bzw. Entriegeln einer kippbaren Kabine für ein eine Fahrgestellstruktur aufweisendes Nutzfahrzeug, wie z.B. einen Lastkraftwagen, insbesondere eine Sattelzugmaschine.

Fahrerkabinen für Nutzfahrzeuge können im Wesentlichen in zwei Gruppen unterteilt werden. Die eine Gruppe umfasst Fahrerkabinen für Nutzfahrzeuge im niedrigen Tonnagebereich und die andere Gruppe umfasst Fahrerkabinen für sogenannte schwere Nutzfahrzeuge. Bei der Verriegelung einer Fahrerkabine für ein Nutzfahrzeug im niedrigen Tonnagebereich sind andere Anforderungen zu erfüllen, als bei der Verriegelung einer Fahrerkabine für ein schweres Nutzfahrzeug, wo das Kippen meist durch Hydraulikzylinder erfolgt und zudem die Verriegelung ebenso hydraulisch realisiert wird, z.B. durch hydraulisch betätigte Schlösser. Fahrerkabinen für Nutzfahrzeuge im niedrigen Tonnagebereich sind aufgrund z.B. einer Drehatabfederunterstützung an der hinteren Auflagestelle zumindest annähernd schwerelos und können durch Handbetätigung gekippt werden. Für einen fehlbedienungssicheren Ver- und Entriegelungsvorgang als auch für die Sicherstellung der Fixierung der Fahrerkabine im Fahrbetrieb sind zusätzliche Sicherheitsvorkehrungen vorzusehen. Zu diesem Zweck sind Arretiervorrichtungen in Verwendung, wobei zur Erfüllung eines fehlbedienungssicheren Ver- und Entriegelungsvorgangs und für die Sicherstellung der Fixierung der Fahrerkabine im Fahrbetrieb mehrere Hebel zu betätigen sind. Die Funktion und der Betätigungsablauf der Hebel ist oft aufwendig und meist nicht selbsterklärend zu erkennen, was zu einem komplizierten oder zumindest zeitaufwändigen Kippvorgang und/oder Ver- und Entriegelungsvorgang führen kann. GB 1 392 574 A offenbart z. B. eine Vorrichtung zum Auflegen und Sichern einer Kippkabine an einem Fahrzeugrahmen, wobei ein elastisches, fest mit dem Rahmen oder der Kabine verbundenes Auflageglied eine stabile Auflagefläche zur Lagerung der Kabine oder des Rahmens, und ein steifes Verriegelungsglied einer Sperrvorrichtung aufweist, in das ein drehbar mit der Kabine oder dem Rahmen verbundenes bewegliches Glied der Sperrvorrichtung eingreift. Ferner ist zum Stand der Technik auf die US 4 413 696 A zu verweisen.

Eine Aufgabe der Erfindung ist es, eine alternative und/oder verbesserte Arretiervorrichtung zum Verriegeln und Entriegeln einer kippbaren Kabine für ein Nutzfahrzeug zu schaffen. Insbesondere ist es eine Aufgabe der Erfindung, eine Arretiervorrichtung zu schaffen, die einfach aufgebaut ist und wenig Einbauraum beansprucht und/oder die einen zwingend vorbestimmten Betätigungs-/Bedienungsablauf (z.B. Ver- und Entriegelungsablauf) vorsieht, wodurch ein fehlerfreier und sicherer Betätigungs-/Bedienungsablauf realisiert werden kann.

Diese Aufgabe kann insbesondere durch die Merkmale des Hauptanspruchs gelöst werden. Vorteilhafte Weiterbildungen sind den Unteransprüchen zu entnehmen.

Erfindungsgemäß wird eine Arretiervorrichtung zum Verriegeln und Entriegeln einer kippbaren Kabine (z.B. eine Fahrerkabine, ein Fahrerhaus, etc.) für ein Nutzfahrzeug (z.B. ein Lastkraftwagen, vorzugsweise eine Sattelzugmaschine), das zweckmäßig eine Fahrgestellstruktur umfasst, geschaffen. Die Kabine ist vorzugsweise händisch hochkippbar, optional mit Unterstützung durch eine oder mehrere Kippkraftunterstützungseinrichtungen (z.B. Drehstabfeder(n)). Die Arretiervorrichtung umfasst eine Welle, die sich vorzugsweise im Wesentlichen quer zur Fahrtrichtung bzw. Längsrichtung des Nutzfahrzeugs erstreckt. Die Arretiervorrichtung umfasst ferner eine Hebeleinrichtung, die zum Betätigen der Welle dient, insbesondere zum Drehen und axialen Verschieben der Welle und zweckmäßig zum Kippen der Kabine. Die Hebeleinrichtung ist zweckmäßig mittelbar oder unmittelbar an die Welle gekoppelt.

Die Arretiervorrichtung zeichnet sich insbesondere dadurch aus, dass einzig durch Betätigung der Hebeleinrichtung die kippbare Kabine vorzugsweise mittels der Welle in einen abgekippten Zustand und einen hochgekippten Zustand bringbar ist und zudem in dem abgekippten Zustand einzig durch Betätigung der Hebeleinrichtung verriegelt und/oder entriegelt werden kann. Dadurch kann vorzugsweise ein zwingend vorbestimmter Betätigungs-/Bedienungsablauf (z.B. Ver- und Entriegelungsablauf) für die Hebeleinrichtung geschaffen werden, was insbesondere zu einem fehlerfreien und sicheren Betätigungs-/Bedienungsvorgang führt.

Die Hebeleinrichtung dient insbesondere zum Drehen und/oder axialen Verschieben der Welle und/oder zum Kippen der Kabine. Insbesondere ist die Hebeleinrichtung drehbar ausgeführt, um die Welle drehen zu können, und/oder schwenkbar ausgeführt, um die Welle axial verschieben zu können.

Es ist möglich, dass die Hebeleinrichtung axial verschiebbar ist und eine eingefahrene Verstauposition, in der sie vorzugsweise unter der Kabine verstaubar ist, während ihr Griff frei zugänglich bleibt, und/oder eine ausgefahrene Position, in der sie klappbar, drehbar und/oder schwenkbar ist, einnehmen kann. Der Griff kann z.B. in einer Mulde an der Kabinenaußenseite, insbesondere einer Mulde am B-Säulen-Außenblech, aufgenommen werden. Die Hebeleinrichtung ist in ihrer ausgefahrenen Position ausklappbar, um zweckmäßig das Drehen und/oder Schwenken der Hebeleinrichtung bewerkstelligen zu können, und/oder einklappbar ist, um zweckmäßig in die eingefahrene Verstauposition gebracht werden zu können.

Die Arretiervorrichtung ist so ausgebildet, dass im hochgekippten Zustand der Kabine das Drehen der Welle und somit der Hebeleinrichtung unterbunden werden kann. Dadurch kann vorzugsweise vermieden werden, dass die Welle in eine ungewollte Schließstellung gelangt, die z.B. ein Verriegeln der Kabine im abgekippten Zustand und/oder das Erreichen des abgekippten Zustands behindern oder unmöglich machen würde.

Die Welle kann vorzugsweise in z.B. zwei kabinenfesten Konsolen gelagert sein.

Die Welle umfasst vorzugsweise z.B. zwei im Wesentlichen U-förmige Nocken, die an oder in den Konsolen angeordnet sind und die z.B, durch Drehen der Welle mit fahrgestellstrukturfesten Eingreifeinrichtungen (z.B. Hakenelemente) in Eingriff und außer Eingriff gebracht werden können. Es ist möglich, dass die Konsolen zum Zusammenwirken mit den Eingreifeinrichtungen benachbart über den Eingreifeinrichtungen platziert werden, wenn die Kabine in den abgekippten und/oder verriegelten Zustand gebracht wird, und/oder von den Eingreifeinrichtungen entfernt werden, wenn die Kabine in den hochgekippten Zustand gebracht wird.

Es ist möglich, dass die Eingreifeinrichtungen jeweils mit einer Kontur versehen sind, die so ausgeführt ist, dass zu Beginn des Verriegelungsvorgangs die Nocken an einer Anlageschräge entlang gleiten können. Dadurch können Auflageflächen an den Konsolen gegen elastische Auflagen an den Eingreifeinrichtungen beaufschlagt werden, um zweckmäßig eine Spannung zu erzeugen.
tung 26 erfolgt dann nach dem Ausziehen aus der Wellenverlängerung 12 und zweckmäßig nach oben, anstatt nach unten.

Die Kontur ist vorzugsweise so ausgeführt, dass zum Ende des Verriegelungsvorgangs die Spannung zumindest geringfügig freigebbar ist. Dadurch kann vorzugsweise ein sicherer Eingriff in Übertotpunktlage realisiert werden.

Es ist möglich, dass die Welle mit einem Federmittel versehen ist und insbesondere in Offenstellung axial gegen das Federmittel verschiebbar ist. Das Federmittel ist vorzugsweise koaxial auf der Welle angeordnet.

Die Welle umfasst zweckmäßig einen Endabschnitt, der z.B. an dem der Hebeleinrichtung entgegengesetzten Ende der Welle angeordnet ist und der beim Abkippvorgang der Kabine an einer vorzugsweise schrägen Anlauffläche an einer der Eingreifeinrichtungen entlang gleiten kann und/oder der am Ende des Abkippvorgangs an einer der Eingreifeinrichtungen verrastbar ist, vorzugsweise quasi automatisch bewirkt durch das Federmittel, z.B. in einer Öffnung, die durch den Endabschnitt durchquert werden kann. Die Verrastung des Endabschnitts an einer der Eingreifeinrichtungen ist vorzugsweise durch das Schwenken der Hebeleinrichtung und das damit erzeugte axiale Verschieben der Welle lösbar.

Es ist möglich, dass die Welle zweckmäßig an ihrem der Hebeleinrichtung zugewandten Ende eine Verlängerung aufweist, die in einem kabinenfesten, feststehenden Haltelement drehbar und verschiebbar aufgenommen ist. Die Verlängerung und/oder das Halteelement ist vorzugsweise im Wesentlichen rohrförmig ausgebildet.

Es ist möglich, dass die Verlängerung einen sich im Wesentlichen axial erstreckenden Schlitz aufweist. Es ist möglich, dass das Haltelement einen Schlitz aufweist, der einen ersten sich im Wesentlichen axial erstreckenden Schlitzabschnitt, einen zweiten sich schräg oder (z.B. über ungefähr 90°) radial erstreckenden Schlitzabschnitt und einen dritten sich im Wesentlichen axial erstreckenden Schlitzabschnitt umfasst.

Vorzugsweise definiert der Schlitz der Verlängerung und/oder der erste Schlitzabschnitt des Halteelements das axiale Ausziehausmaß der Hebeleinrichtung.

Vorzugsweise definiert der zweite Schlitzabschnitt des Halteelements das Drehausmaß (z.B. ungefähr 90°) der Welle.

Vorzugsweise definiert der dritte Schlitzabschnitt des Halteelements die Länge des axialen Verschiebebereichs der Welle.

Vorzugsweise ist der Schlitz der Verlängerung im Wesentlichen gleich lang wie der erste Schlitzabschnitt des Halteelements.

Es ist möglich, dass die Hebeleinrichtung mit einem Bolzenelement versehen ist, das durch den Schlitz der Verlängerung und durch den Schlitz des Haltelements passierbar ist.

Das Halteelement kann z.B. an seiner Oberseite eine Durchlassöffnung (z.B. eine Bohrung) und eine Halteeinrichtung für ein durch ein Federelement beaufschlagbares Bolzenteil umfassen. Das Bolzenteil kann im entriegelten Zustand und/oder hochgekippten Zustand der Kabine mittels des Federelements durch die Durchlassöffnung passiert werden und vorzugsweise mit dem Schlitz der Verlängerung in Eingriff gebracht werden, um zweckmäßig ein ungewolltes Drehen der Welle vermeiden zu können.

Die Arretiervorrichtung, insbesondere eine der Eingreifeinrichtungen, kann eine fahrgestellstrukturfeste Anlagefläche umfassen, an der das Bolzenteil im verriegelten Zustand gegen die Kraft des Federelements abgestützt werden kann und davon außer Eingriff gebracht werden kann, wenn die Kabine im abgekippten Zustand ist.

Das Halteelement kann zweckmäßig an einem seiner axialen Endabschnitte mit einer Abstütznase versehen sein, die vorzugsweise den Außenumfang des Halteelements radial überragt und dazu dient, das Schwenken bzw. Drehen der Hebeleinrichtung zu begrenzen. Alternativ oder ergänzend kann die Abstütznase als Abstützung für die Hebeleinrichtung dienen, um das vorzugsweise durch das Schwenken der Hebeleinrichtung erzeugte axiale Verschieben der Welle zu ermöglichen. Die Abstütznase kann somit zweckmäßig als Widerlager für die Hebeleinrichtung während des Schwenkens davon wirken.

Die Hebeleinrichtung kann ein längliches Teil und einen mit dem länglichen Teil verbundenen Griff aufweisen. Insbesondere kann das längliche Teil in der Verlängerung abgelegt und insbesondere verstaut werden, z.B. wenn die Kabine im abgekippten Zustand ist und verriegelt werden soll. Alternativ oder ergänzend kann das längliche Teil aus der Verlängerung gezogen werden, wenn die Kabine in den entriegelten und/oder hochgekippten Zustand gebracht werden soll. Es ist möglich, dass in der eingefahrenen (Verstau-) Position der Hebeleinrichtung das längliche Teil im Wesentlichen vollständig unter der Kabine verstaubar ist, während der Griff frei zugänglich bleibt. Der Griff kann z.B. in einer Mulde an der Kabinenaußenseite, insbesondere einer Mulde des B-Säulen-Außenblechs, aufgenommen werden.

Die Arretiervorrichtung ist vorzugsweise so ausgebildet, dass die Verlängerung, das Halteelement, das längliche Teil und/oder die Welle zumindest im verriegelten Zustand der Kabine vorzugsweise koaxial ausgerichtet sind und/oder ineinander geschoben sind.

Die Arretiervorrichtung kann eine Sicherungseinrichtung umfassen, die dazu dient, die Hebeleinrichtung in eingefahrener (Verstau-) Position gegen ein ungewolltes Auswandern hin zu der ausgefahrenen Position zu sichern.

Es ist möglich, dass die Hebeleinrichtung über eine Gelenkeinrichtung mit der Welle, insbesondere deren Verlängerung, verbunden ist. Die Gelenkeinrichtung dient insbesondere dazu, ein Drehen, ein Schwenken und ein Ein- und Ausklappen der Hebeleinrichtung zu ermöglichen.

Zu erwähnen ist, dass vorzugsweise zusätzlich die Kabine einzig durch Betätigung der Hebeleinrichtung händisch in einen abgekippten Zustand und/oder einen hochgekippten Zustand bringbar ist, vorzugsweise unterstützt durch eine Hilfskrafteinrichtung (z.B. eine oder mehrere Drehstabfedern).

Die Erfindung ist nicht auf eine Arretiervorrichtung beschränkt, sondern umfasst auch ein Nutzfahrzeug, z.B. einen Lastkraftwagen, insbesondere eine Sattelzugmaschine, mit einer insbesondere kippbaren Kabine und einer Arretiervorrichtung wie hierin beschrieben.

Zu erwähnen ist noch, dass das Merkmal "durch Betätigung einzig der Hebeleinrichtung" vorzugsweise ein Drehen, ein axiales Verschieben, ein Ausklappen, ein Einklappen, ein Schwenken, ein Anheben, ein Absenken und/oder ein Loslassen der Hebeleinrichtung umfasst. Durch das Loslassen z.B. können insbesondere federbeaufschlagte oder anderweitig unter Vorspannung stehende Mechanismen der Arretiervorrichtung aktiviert werden.

Zu erwähnen ist ferner, dass das Drehen der Hebeleinrichtung zweckmäßig entlang einer Drehebene erfolgt und das Schwenken der Hebeleinrichtung entlang einer Schwenkebene erfolgt. Vorzugsweise kreuzt die Schwenkebene die Drehebene, z.B. im Wesentlichen orthogonal. Es ist ebenso möglich, dass das Klappen der Hebeleinrichtung entlang einer Klappebene erfolgt, die die Drehebene und/oder die Schwenkebene kreuzt, z.B. im Wesentlichen orthogonal.

Die vorstehend beschriebenen Merkmale und bevorzugten Ausführungsformen der Erfindung sind beliebig miteinander kombinierbar. Andere vorteilhafte Weiterbildungen der Erfindung sind in den Unteransprüchen offenbart oder ergeben sich aus der nachstehenden Beschreibung bevorzugter Ausführungsformen der Erfindung in Verbindung mit den beigefügten Figuren.
- Fig. 1: zeigt eine perspektivische Explosionsansicht einer Arretiervorrichtung gemäß einer Ausführungsform der Erfindung,
- Fig. 2: zeigt eine Seitenansicht eines Teils der Arretiervorrichtung der Fig. 1 in unterschiedlichen Betriebszuständen,
- Fig. 3: zeigt eine andere Seitenansicht eines Teils der Arretiervorrichtung der Figuren 1 und 2 in unterschiedlichen Betriebszuständen,
- Fig. 4: zeigt die Arretiervorrichtung der Figuren 1 bis 3 und einen Teil einer Kabine für ein Nutzfahrzeug, und
- Fig. 5-9: zeigen die Arretiervorrichtung der Figuren 1 bis 4 in unterschiedlichen Betriebszuständen.

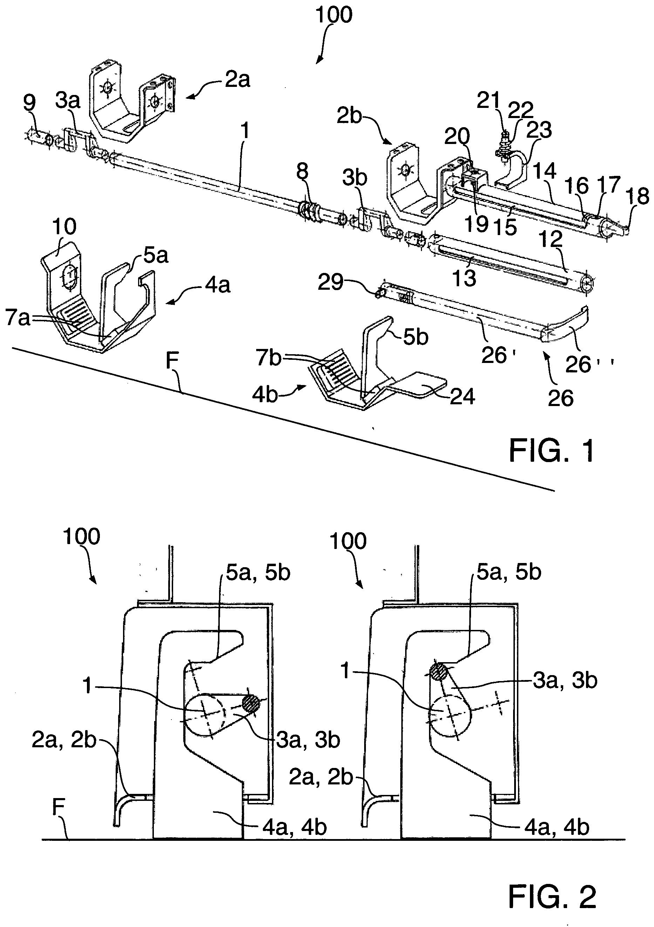

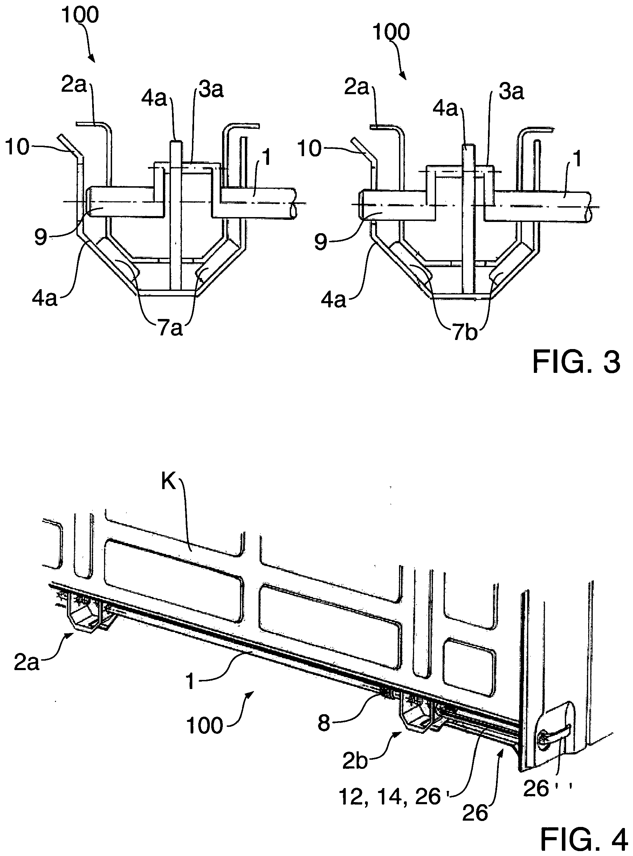

Figur 1 zeigt eine perspektivische Explosionsansicht einer Arretiervorrichtung 100 zum Verriegeln und Entriegeln einer kippbaren Kabine K (siehe Figur 4), insbesondere eines kippbaren Fahrerhauses, für ein eine Fahrgestellstruktur F aufweisendes Nutzfahrzeug, wie etwa einen Lastkraftwagen. Die Fahrgestellstruktur F ist nur schematisch dargestellt. Die Arretiervorrichtung 100 findet insbesondere Verwendung bei kippbaren Kabinen für Nutzfahrzeuge im niedrigen Tonnagebereich, die meist händisch mit optionaler Unterstützung durch eine oder mehrere Hilfskrafteinrichtungen (z.B. Drehstabfedern) hochkippbar sind. Mittels der Hilfskrafteinrichtungen sind die Kabinen an der hinteren Auflagerstelle entlastet, vorzugsweise annähernd schwerelos und somit durch Handbetätigung hochkippbar.

Die Arretiervorrichtung 100 umfasst eine Welle 1, die sich im Wesentlichen quer zur Fahrtrichtung des Nutzfahrzeugs erstreckt. Die Arretiervorrichtung 100 umfasst zudem eine Hebeleinrichtung 26, die mit der Welle 1 mechanisch verbunden ist und zur Betätigung der Welle 1 dient, insbesondere zum Drehen und axialen Verschieben der Welle 1. Die Arretiervorrichtung 100 ist so ausgeführt, dass einzig durch Betätigung der Hebeleinrichtung 26 die kippbare Kabine K mittels der Welle 1 in einen abgekippten Zustand und einen hochgekippten Zustand gebracht werden kann und zudem in dem abgekippten Zustand einzig durch Betätigung der Hebeleinrichtung 26 verriegelt und entriegelt werden kann.

Die Arretiervorrichtung 100 umfasst ferner zwei Konsolen 2a und 2b, die an der Kabine K festgemacht sind und in denen die Welle 1 gelagert ist. Die Welle 1 umfasst zwei im Wesentlichen U-förmige Nocken 3a und 3b, die an oder in den Konsolen 2a und 2b angeordnet sind und die durch Drehen der Welle 1 mit zwei Eingreifeinrichtungen 4a und 4b, die an der Fahrgestellstruktur F festgemacht sind, in Eingriff und außer Eingriff gebracht werden können. Die Eingreifeinrichtung 4a ist mit einer Kontur 5a versehen und die Eingreifeinrichtung 4b ist mit einer Kontur 5b versehen. Die Konturen 5a und 5b sind so ausgeführt, dass zu Beginn des Verriegelungsvorgangs die Nocken 3a und 3b an einer Anlaufschräge entlang gleiten können, wodurch Auflageflächen an den Konsolen 2a und 2b gegen elastische Auflagen 7a und 7b an den Eingreifeinrichtungen 4a und 4b beaufschlagt werden, um eine Spannung zu erzeugen. Die Konturen 5a und 5b sind zudem so ausgeführt, dass zum Ende des Verriegelungsvorgangs die Spannung zumindest geringfügig freigegeben werden kann, wodurch ein sicherer Eingriff quasi in Übertotpunktlage in Bezug auf die Konturen 5a und 5b realisiert werden kann.

Die Welle 1 ist zudem an ihrem Außenumfang mit einem Federmittel 8 (z.B. eine Schraubfeder) versehen, gegen das die Welle 1 axial verschiebbar ist. Die Welle 1 umfasst außerdem einen Endabschnitt 9, der an dem der Hebeleinrichtung 26 entgegengesetzten Ende der Welle 1 angeordnet ist. Der Endabschnitt 9, die Konsole 2a und die Eingreifeinrichtung 4a sind so ausgebildet, dass der Endabschnitt 9 beim Abkippvorgang der Kabine K an einer Anlauffläche 10 der Eingreifeinrichtung 4a entlang gleiten kann und am Ende des Abkippvorgangs an einer Öffnung in der Eingreifeinrichtung 4a bewirkt durch das Federmittel 8 quasi automatisch verrastet.

Die Welle 1 und die Hebeleinrichtung 26 stehen mittels eines Kopplungsmechanismus miteinander in Wirkverbindung. Der Kopplungsmechanismus umfasst insbesondere Teile der Welle 1 und Teile der Hebeleinrichtung 26 und zudem eine Wellenverlängerung 12 und ein an die Konsole 2b montiertes Halteelement 14. Die Verlängerung 12 ist koaxial in dem Halteelement 14 untergebracht.

Die Hebeleinrichtung 26 wird durch ein längliches, rohrförmiges Teil 26' und einen mit dem länglichen Teil 26' verbundenen Griff 26" gebildet. Das längliche Teil 26' kann in die Verlängerung 12 und das Halteelement 14 eingeschoben und daraus herausgezogen werden. Die Welle 1, die Verlängerung 12, das Halteelement 14 und das längliche Teil 26' sind im Wesentlichen rohr- oder stabförmig ausgebildet und im verriegelten Zustand der Kabine K koaxial ausgerichtet.

Die Verlängerung 12 weist einen Schlitz 13 auf, der sich im Wesentlichen axial und vorzugsweise über einen Großteil der Länge der Verlängerung 12 erstreckt. Das Halteelement 14 weist einen Schlitz 15, 16 und 17 auf, der durch einen ersten sich im Wesentlichen axial erstreckenden Schlitzabschnitt 15, einen zweiten sich im Wesentlichen radial über 90° erstreckenden Schlitzabschnitt 16 und einen dritten sich im Wesentlichen axial erstreckenden Schlitzabschnitt 17 gebildet wird. Der Schlitz 13 der Verlängerung 12 und der erste Schlitzabschnitt 15 sind im Wesentlichen gleich lang ausgeführt und im Wesentlichen deckungsgleich positionierbar. Der Schlitz 13 der Verlängerung 12 bzw. der erste Schlitzabschnitt 15 des Halteelements 14 begrenzen das axiale Ausziehausmaß der Hebeleinrichtung 26. Der zweite Schlitzabschnitt 16 des Halteelements 14 begrenzt das Drehausmaß der Welle 1 auf ungefähr 90°. Der dritte Schlitzabschnitt 17 des Halteelements 14 begrenzt die Länge des axialen Verschiebebereichs der Welle 1.

Die Hebeleinrichtung 26, insbesondere deren längliches Teil 26', ist mit einem Bolzenelement 29 versehen, das durch den Schlitz 13 der Verlängerung 12 und den Schlitz 15, 16 und 17 geführt werden kann.

Das Halteelement 14 umfasst an seiner Oberseite eine Durchlassöffnung 19 und eine Halteeinrichtung 20 für ein durch ein Federelement 22 (z.B. eine Schraubfeder) beaufschlagbares Bolzenteil 21. Das Bolzenteil 21 und das Federelement 22 sind an einem Halteteil 23 (z.B. ein Bügel oder ein Winkel) gehalten. Das Bolzenteil 21 dient dazu, im entriegelten und hochgekippten Zustand der Kabine K mittels des Federelements 22 durch die Durchlassöffnung 19 zu tauchen und mit dem Schlitz 13 der Verlängerung 12 in Eingriff zu kommen, wodurch ein ungewolltes Drehen der Welle 1 unterbunden werden kann.

Die Eingreifeinrichtung 4b umfasst eine Anlagefläche 24, an der das Bolzenteil 21 im verriegelten Zustand gegen die Kraft des Federelements 22 abstützbar ist und von der das Bolzenteil 21 außer Eingriff gelangt, wenn die Kabine K im abgekippten Zustand ist.

Das Halteelement 14 hat an seinem dem Griff 26" zugewandten axialen Endabschnitt eine Abstütznase 18, die über den Außenumfang des Halteelements 14 ragt und mit der Hebeleinrichtung 26 in Anlage gebracht werden kann, wenn die Hebeleinrichtung 26 geschwenkt wird, um die Welle 1 axial zu verschieben.

Die Arretiervorrichtung 100 umfasst vorzugsweise noch eine nicht gezeigte Sicherungseinrichtung, die dazu dient, die Hebeleinrichtung 26 in eingefahrener Position gegen ein ungewolltes Auswandern zu sichern.

Figur 2 zeigt eine Seitenschnittansicht der Arretiervorrichtung 100 der Figur 1 im montierten Zustand und in unterschiedlichen Betriebszuständen. Figur 2 zeigt die Arretiervorrichtung 100 im abgekippten Zustand der Kabine K. Die Konsolen 2a und 2b sind benachbart über den Eingreifeinrichtungen 4a und 4b platziert, um mit diesen zusammenwirken zu können.

Der linke Teil der Figur 2 zeigt die Arretiervorrichtung 100 in einem entriegelten Zustand, in den sie einzig durch Betätigung der Hebeleinrichtung 26 gebracht wurde und in dem die Kabine K einzig durch Betätigung der Hebeleinrichtung 26 angehoben werden kann.

Der rechte Teil der Figur 2 zeigt die Arretiervorrichtung 100 in einem verriegelten Zustand, in den sie einzig durch Betätigung der Hebeleinrichtung 26 gebracht wurde und in dem die Kabine K sicher verriegelt ist.

Figur 3 zeigt eine Seitenansicht der Arretiervorrichtung 100 der Figuren 1 und 2 im montierten Zustand und in unterschiedlichen Betriebszuständen.

Der linke Teil der Figur 3 zeigt die Arretiervorrichtung 100 im abgekippten und entriegelten Zustand der Kabine K, in den sie durch Betätigung einzig der Hebeleinrichtung 26 gebracht wurde und in dem die Kabine K durch Betätigung einzig der Hebeleinrichtung 26 angehoben werden kann. Zu sehen ist insbesondere, dass der Endabschnitt 9 der Welle 1 nach rechts entgegen der Kraft des Federmittels 8 verschoben ist, um von der Eingreifeinrichtung 4a außer Eingriff zu kommen.

Der rechte Teil der Figur 3 zeigt die Arretiervorrichtung 100 im abgekippten und verriegelten Zustand der Kabine K, in den sie durch Betätigung einzig der Hebeleinrichtung 26 gebracht wurde. Zu sehen ist insbesondere, dass der Endabschnitt 9 der Welle 1 bewirkt durch das Federmittel 8 nach links verschoben ist, um mit der Eingreifeinrichtung 4a in Eingriff zu kommen, wodurch ein ungewolltes Abheben der Kabine K unterbunden werden kann.

Figur 4 zeigt eine perspektivische Ansicht eines Teils der Kabine K (z.B. ein Fahrerhaus) für ein Nutzfahrzeug und eines Teils der Arretiervorrichtung 100 im montierten Zustand. Die fahrgestellstrukturfesten Teile der Arretiervorrichtung 100, insbesondere die Eingreifeinrichtungen 4a und 4b sind der Übersichtlichkeit halber in Figur 4 weggelassen.

Figur 4 zeigt einen Teil der Kabine K im abgekippten und verriegelten Zustand. Die Hebeleinrichtung 26 ist eingefahren und unter der Kabine K verstaut. Insbesondere ist der längliche Teil 26' koaxial in die Verlängerung 12 und das Halteelement 14 eingeschoben, während der Griff 26" in einer Mulde an der Kabinenaußenseite, insbesondere dem B-Säulen-Außenblech, aufgenommen, aber frei zugänglich ist.

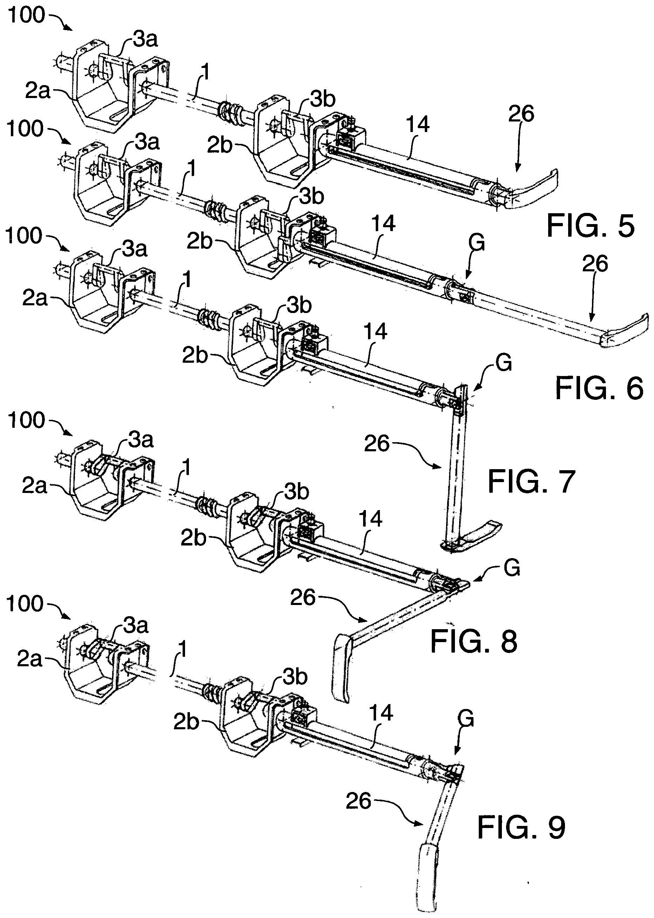

Die Figuren 5 bis 9 zeigen einen Teil der Arretiervorrichtung 100 in unterschiedlichen Betriebszuständen und zwar ausgehend von einem abgekippten, verriegelten Zustand der Kabine K hin zu einem entriegelten, hochgekippten Zustand der Kabine K.

Figur 5 zeigt die Arretiervorrichtung 100 in einem Zustand, in dem die Kabine K abgekippt und verriegelt ist. Die Hebeleinrichtung 26 befindet sich in eingefahrenem und eingeklappten Zustand. Das Halteelement 14, die Verlängerung 12 und das längliche Teil 26' sind ineinander geschoben und koaxial zu der Welle 1 ausgerichtet.

Figur 6 zeigt die Arretiervorrichtung 100 in einem Zustand, in dem die Kabine K abgekippt und verriegelt ist. Die Hebeleinrichtung 26 befindet sich in einem ausgefahrenen, aber noch nicht ausgeklappten Zustand. Figur 6 zeigt ferner eine Gelenkeinrichtung G, über die die Hebeleinrichtung 26 mit der Welle 1 verbunden ist und mittels der die Hebeleinrichtung 26 drehbar, schwenkbar und ein- und ausklappbar ist.

Figur 7 zeigt die Arretiervorrichtung 100 in einem Zustand, in dem die Kabine K abgekippt und verriegelt ist. Die Hebeleinrichtung 26 befindet sich in einem ausgefahrenen und ausgeklappten Zustand, um gedreht werden zu können.

Figur 8 zeigt die Arretiervorrichtung 100 in einem Zustand, in dem die Kabine K abgekippt und die Nocken 3a und 3b durch Drehen der Hebeleinrichtung 26 von den Eingreifeinrichtungen 4a und 4b außer Eingriff gebracht wurden. Die Hebeleinrichtung 26 ist gegenüber Figur 7 um ca. 90° gedreht.

Figur 9 zeigt die Arretiervorrichtung 100 in einem Zustand, in dem der Endabschnitt 9 von der Eingreifeinrichtung 4a außer Eingriff ist und die Kabine K entriegelt und zumindest geringfügig angehoben ist oder angehoben werden kann. Der Endabschnitt 9 wurde durch Schwenken der Hebeleinrichtung 26 und das damit erzeugte axiale Verschieben der Welle 1 von der Eingreifeinrichtung 4a außer Eingriff gebracht. Die Abstütznase 18 dient zur Abstützung der Hebeleinrichtung 26 während des Schwenkens, um das axiale Verschieben der Welle 1 zu ermöglichen. Wie aus einem Vergleich der Figuren 8 und 9 ersichtlich wird, erfolgt das Drehen der Hebeleinrichtung 26 entlang einer Drehebene und das Schwenken der Hebeleinrichtung 26 entlang einer Schwenkebene, die die Drehebene im Wesentlichen orthogonal kreuzt.

Unter erneuter Bezugnahme auf die Figuren 1 bis 9 funktioniert die Arretiervorrichtung 100 wie folgt:
Ausgehend von einem wie in Figur 5 gezeigten verriegelten Zustand wird zur Entriegelung zunächst die Hebeleinrichtung 26 gemäß Figur 6 aus der Verlängerung 12 gezogen. Dabei gleitet das Bolzenteil 21 entlang des Schlitzes 13 der Verlängerung 12 und des Schlitzabschnitts 15 des Halteelements 14.

In einem zweiten Schritt kann gemäß Figur 7 die Hebeleinrichtung 26 in der ausgezogenen Position um z.B. ungefähr 90° ausgeklappt werden.

In einem dritten Schritt wird die Welle 1 gemäß Figur 8 mittels der ausgeklappten Hebeleinrichtung 26 um z.B. ungefähr 90° gedreht, wodurch die Nocken 3a und 3b außer Eingriff von den Eingreifeinrichtungen 4a und 4b gebracht werden. Das Bolzenteil 21 gleitet dabei entlang des zweiten Schlitzabschnitts 16 des Halteelements 14.

Nun kann im nächsten Schritt die Hebeleinrichtung 26 gemäß Figur 9 gegen die Kraft des Federmittels 8 nach außen geschwenkt werden, wobei sich die Hebeleinrichtung 26 an der Abstütznase 18 abstützt, das Bolzenteil 21 im dritten Schlitzabschnitt 17 des Halteelements 14 gleitet und der Endabschnitt 9 der Welle 1 aus der Eingreifeinrichtung 4a herausgezogen wird. In dieser Stellung kann nun einzig durch Betätigung der Hebeleinrichtung 26 die Kabine K zum Kippen angehoben werden. Durch den Anhebvorgang verliert die Abstützung des federbeaufschlagten Bolzenteils 21 den Kontakt mit der Anlagefläche 24. Das Bolzenteil 21 kann nun durch die Durchlassöffnung 19 im Halteelement 14 tauchen und mit dem Schlitz 13 der Verlängerung 12 in Eingriff kommen, der nach dem Drehen der Welle 1 zum Entriegeln derselben mit der Durchlassöffnung 29 ausgerichtet ist, insbesondere sich im Bereich der Durchlassöffnung 29 befindet. Dadurch kann verhindert werden, dass die Welle 1 im hochgekippten Zustand der Kabine K in einen verriegelten Zustand gebracht wird, wodurch eine sichere Verriegelung beim Abkippvorgang verhindert werden würde. Da ein Verdrehen der Welle 1 und damit der Hebeleinrichtung 26 bei hochgekippter Kabine K aufgrund des Eingriffs des Bolzenteils 21 im Schlitz 13 der Verlängerung 12 unterbunden und somit nicht möglich ist, kann die Hebeleinrichtung 26 nun auch zum händischen Abkippen der Kabine K genutzt werden. Zu erwähnen ist, dass der Eingriff des Bolzenteils 21 in die Verlängerung 12 konstruktionsbedingt auch in einen separaten Schlitz erfolgen kann.

In einer weiteren Ausgestaltung der Erfindung ist es möglich, entgegen der beschriebenen Ausführungsform die Öffnung der Eingreifeinrichtungen 4a und 4b z.B. um ungefähr 180° zu drehen, wobei dann der eigentliche Verriegelungsvorgang durch Verdrehen der Welle 1 in entgegengesetzter Richtung zu erfolgen hat. Das Ausschwenken der Hebeleinrich-Der Ablauf zum Verriegeln der Kabine K in Fahrstellung erfolgt in umgekehrter Reihenfolge wie beim Entriegeln mit der Ausnahme, dass das axiale Verschieben der Welle 1 gegen die Federkraft des Federmittels 8 durch Gleiten des Endabschnitts 9 der Welle 1 an der Anlauffläche 10 der Eingreifeinrichtung 4a erfolgt und somit eine quasi automatische Sicherung realisiert wird.

## Patentansprüche

1. Arretiervorrichtung (100) zum Verriegeln und Entriegeln einer kippbaren Kabine (K) für ein eine Fahrgestellstruktur (F) aufweisendes Nutzfahrzeug, mit:
- einer Welle (1), die sich vorzugsweise im Wesentlichen quer zur Längsrichtung des Nutzfahrzeugs erstreckt, und
- einer Hebeleinrichtung (26), die zum Betätigen der Welle (1) dient und vorzugweise an die Welle (1) mechanisch gekoppelt ist, wobei durch Betätigung einzig der Hebeleinrichtung (26) die Kabine (K) in einen abgekippten Zustand und einen hochgekippten Zustand bringbar ist und zudem in dem abgekippten Zustand entriegelbar und/oder verriegelbar ist, **dadurch gekennzeichnet, dass**
- im hochgekippten Zustand der Kabine (K) das Drehen der Welle (1) und somit der Hebeleinrichtung (26) unterbunden wird, und
- die Hebeleinrichtung (26) eine ausgefahrene Position einnehmen kann, in der sie klappbar, drehbar und/oder schwenkbar ist, und eine eingefahrene Verstauposition, in der sie unter der Kabine (K) verstaubar ist, während ihr Griff (26") frei zugänglich bleibt.

2. Arretiervorrichtung (100) nach Anspruch 1, **dadurch gekennzeichnet, dass** die Hebeleinrichtung (26) zum Drehen und/oder axialen Verschieben der Welle (1) und zum Kippen der Kabine (K) dient.

3. Arretiervorrichtung (100) nach Anspruch 1 oder 2, **dadurch gekennzeichnet, dass** die Hebeleinrichtung (26) drehbar ist, um die Welle (1) zu drehen, und schwenkbar ist, um die Welle (1) axial zu verschieben.

4. Arretiervorrichtung (100) nach einem der vorhergehenden Ansprüche, **dadurch gekennzeichnet, dass** die Welle (1) in zwei kabinenfesten Konsolen (2a, 2b) gelagert ist.

5. Arretiervorrichtung (100) nach Anspruch 4, **dadurch gekennzeichnet, dass** die Welle (1) zwei Nocken (3a, 3b) aufweist, die an oder in den Konsolen (2a, 2b) angeordnet sind und die durch Drehen der Welle (1) mit fahrgestellstrukturfesten Eingreifeinrichtungen (4a, 4b) in Eingriff und außer Eingriff bringbar sind.

6. Arretiervorrichtung (100) nach Anspruch 5, **dadurch gekennzeichnet, dass** die Eingreifeinrichtungen (4a, 4b) jeweils mit einer Kontur (5a, 5b) versehen sind, die so ausgeführt ist, dass zu Beginn des Verriegelungsvorgangs die Nocken (3a, 3b) an einer Anlaufschräge entlang gleitbar sind, wodurch zwischen den Konsolen (2a, 2b) und den Eingreifeinrichtungen (4a, 4b) mittels elastischer Auflagen (7a, 7b) eine Spannung erzeugbar ist.

7. Arretiervorrichtung (100) nach Anspruch 6, **dadurch gekennzeichnet, dass** die Kontur (5a, 5b) so ausgeführt ist, dass zum Ende des Verriegelungsvorgangs die Spannung zumindest geringfügig freigebbar ist.

8. Arretiervorrichtung (100) nach einem der vorhergehenden Ansprüche, **dadurch gekennzeichnet, dass** die Welle (1) mit einem Federmittel (8) versehen ist und die Welle (1) axial gegen das Federmittel (8) verschiebbar ist.

9. Arretiervorrichtung (100) nach einem der vorhergehenden Ansprüche, **dadurch gekennzeichnet, dass** die Weile (1) einen Endabschnitt (9) aufweist, der an dem der Hebeleinrichtung (26) entgegengesetzten Ende der Welle (1) angeordnet ist und der beim Abkippvorgang der Kabine (K) an einer Anlauffläche (10) an einer der Eingreifeinrichtungen (4a, 4b) entlang gleitbar ist und/oder der am Ende des Abkippvorgang an einer der Eingreifeinrichtungen (4a, 4b) verrastbar ist, vorzugsweise bewirkt durch das Federmittel (8).

10. Arretiervorrichtung (100) nach einem der vorhergehenden Anspruche, **dadurch gekennzeichnet, dass** die Welle (1) an ihrem der Hebeleinrichtung (26) zugewandten Ende eine Verlängerung (12) aufweist, die in einem kabinenfesten Halteelement (14) drehbar und verschiebbar aufgenommen ist und mit der Hebeleinrichtung (26) mechanisch verbunden ist.

11. Arretiervorrichtung (100) nach Anspruch 10, **dadurch gekennzeichnet, dass** die Verlängerung (12) einen Schlitz (13) aufweist, der sich im Wesentlichen axial erstreckt, und das Halteelement (14) einen Schlitz (15, 16, 17) aufweist, der einen ersten sich im Wesentlichen axial erstreckenden Schlitzabschnitt (15), einen zweiten sich schräg oder im Wesentlichen radial erstreckenden Schlitzabschnitt (16) und einen dritten sich im Wesentlichen axial erstreckenden Schlitzabschnitt (17) umfasst.

12. Arretiervorrichtung (100) nach Anspruch 11, **dadurch gekennzeichnet, dass** die Hebeleinrichtung (26) mit einem Bolzenelement (29) versehen ist, das durch den Schlitz (13) der Verlängerung (12) und den Schlitz (15, 16, 17) des Halteelements (14) passierbar ist.

13. Arretiervorrichtung (100) nach einem der Ansprüche 10 bis 12, **dadurch gekennzeichnet, dass** das Halteelement (14) eine Durchlassöffnung (19) und eine Halteeinrichtung (20) für ein durch ein Federelement (22) beaufschlagbares Bolzenteil (21) umfasst, das im entriegelten und hochgekippten Zustand der Kabine (K) mittels des Federelements (22) durch die Durchlassöffnung (19) passierbar ist und mit dem Schlitz (13) der Verlängerung (12) in Eingriff bringbar ist, um ein ungewolltes Drehen der Welle (1) zu vermeiden.

14. Arretiervorrichtung (100) nach Anspruch 13, **dadurch gekennzeichnet, dass** die Arretiervorrichtung (100), insbesondere eine der Eingreifeinrichtungen (4a, 4b), eine fahrgestellstrukturfeste Anlagefläche (24) umfasst, an der das Bolzenteil (21) im verriegelten Zustand gegen die Kraft des Federelements (22) abstützbar ist und davon außer Eingriff gelangt, wenn die Kabine (K) im abgekippten Zustand ist.

15. Arretiervorrichtung (100) nach einem der Ansprüche 10 bis 14, **dadurch gekennzeichnet, dass** das Halteelement (14) an einem seiner axialen Endabschnitte mit einer Abstütznase (18) versehen ist, die den Außenumfang des Halteelements (14) überragt und dazu dient, das Schwenken der Hebeleinrichtung (26) zu begrenzen und/oder als Abstützung für die Hebeleinrichtung (26) während des Schwenkens der Hebeleinrichtung (26) zu wirken, um das axiale Verschieben der Welle (1) zu ermöglichen.

16. Arretiervorrichtung (100) nach einem der Ansprüche 10 bis 15, **dadurch gekennzeichnet, dass** das die Hebeleinrichtung (26) ein längliches Teil (26') und einen Griff (26") umfasst und das längliche Teil (26') in der Verlängerung (26) verstaubar ist, während der Griff (26") frei zugänglich bleibt.

17. Arretiervorrichtung (100) nach einem der Ansprüche 10 bis 16, **dadurch gekennzeichnet, dass** mindestens zwei von Folgenden zumindest im verriegelten Zustand der Kabine (K) koaxial ausgerichtet sind, vorzugsweise ineinander geschoben sind: die Verlängerung (12), das Halteelement (14), das längliche Teil (26'), die Welle (1).

18. Arretiervorrichtung (100) nach einem der vorhergehenden Ansprüche, **dadurch gekennzeichnet, dass** die Arretiervorrichtung (100) eine Sicherungseinrichtung umfasst, die dazu dient, die Hebeleinrichtung (26) in eingefahrener Verstauposition gegen ein ungewolltes Auswandern zu sichern.

19. Arretiervorrichtung (100) nach einem der vorhergehenden Ansprüche, **dadurch gekennzeichnet, dass** die Hebeleinrichtung (26) über eine Gelenkeinrichtung (G) mit der Welle (1) verbunden ist, wobei die Gelenkeinrichtung (G) dazu dient, ein Drehen, ein Schwenken und ein Ein- und Ausklappen der Hebeleinrichtung (26) zu ermöglichen.

20. Arretiervorrichtung (100) nach einem der vorhergehenden Ansprüche, **dadurch gekennzeichnet, dass** die Kabine (K) einzig durch Betätigung der Hebeleinrichtung (26) händisch in den hochgekippten Zustand bringbar ist, vorzugsweise unterstützt durch eine Hilfskrafteinrichtung.

21. Nutzfahrzeug, vorzugsweise Lastkraftwagen, insbesondere Sattelzugmaschine, mit einer kippbaren Kabine (K) und einer Arretiervorrichtung (100) nach einem der vorhergehenden Ansprüche.

## Claims

1. Latching device (100) for locking and unlocking a tiltable cab (K) for a commercial vehicle having a chassis structure (F), comprising:
- a shaft (1) extending preferably substantially transversely to the longitudinal direction of the commercial vehicle, and
- a lever arrangement (26) which serves to actuate the shaft (1) and is preferably coupled mechanically to the shaft (1),
wherein the cab (K) can be moved to a tilted-down state and to a tilted-up state, and in addition can be unlocked and/or locked in the tilted-down state, by actuating only the lever arrangement (26),
**characterized in that**
- rotation of the shaft (1) and therefore of the lever arrangement (26) is prevented in the tilted-up state of the cab (K), and
- the lever arrangement (26) can adopt a deployed position, in which it can be folded, rotated and/or swivelled, and a retracted stowage position, in which it can be stowed below the cab (K) while its handle (26") remains freely accessible.

2. Latching device (100) according to Claim 1, **characterized in that** the lever arrangement (26) is used to rotate and/or axially displace the shaft (1) and to tilt the cab (K).

3. Latching device (100) according to Claim 1 or 2, **characterized in that** the lever arrangement (26) can be rotated in order to rotate the shaft (1) and can be swivelled in order to displace the shaft (1) axially.

4. Latching device (100) according to any one of the preceding claims, **characterized in that** the shaft (1) is mounted in two brackets (2a, 2b) fixed to the cab.

5. Latching device (100) according to Claim 4, **characterized in that** the shaft (1) has two cams (3a, 3b) which are arranged on or in the brackets (2a, 2b) and which can be brought into and out of engagement with engagement devices (4a, 4b) fixed to the chassis structure by rotating the shaft (1).

6. Latching device (100) according to Claim 5, **characterized in that** the engagement devices (4a, 4b) are provided with respective contours (5a, 5b) which are configured in such a way that, at the start of the locking process, the cams (3a, 3b) can slide along an approach ramp, whereby a tension can be generated between the brackets (2a, 2b) and the engagement devices (4a, 4b) by means of elastic pads (7a, 7b).

7. Latching device (100) according to Claim 6, **characterized in that** the contour (5a, 5b) is configured in such a way that the tension can be at least slightly released towards the end of the locking process.

8. Latching device (100) according to any one of the preceding claims, **characterized in that** the shaft (1) is provided with a spring means (8) and the shaft (1) is displaceable axially against the spring means (8).

9. Latching device (100) according to any one of the preceding claims, **characterized in that** the shaft (1) has an end section (9) which is arranged at the end of the shaft (1) opposite the lever arrangement (26) and which can slide along an approach surface (10) on one of the engagement devices (4a, 4b) during the tilting-down process of the cab (K) and/or can be latched to one of the engagement devices (4a, 4b) at the end of the tilting-down process, preferably through the action of the spring means (8).

10. Latching device (100) according to any one of the preceding claims, **characterized in that** the shaft (1) has on its end oriented towards the lever arrangement (26) a prolongation (12) which is received rotatably and displaceably in a retaining element (14) fixed to the cab and is connected mechanically to the lever arrangement (26).

11. Latching device (100) according to Claim 10, **characterized in that** the prolongation (12) has a slot (13) extending substantially axially and the retaining element (14) has a slot (15, 16, 17) which comprises a first slot section (15) extending substantially axially, a second slot section (16) extending obliquely or substantially radially and a third slot section (17) extending substantially axially.

12. Latching device (100) according to Claim 11, **characterized in that** the lever arrangement (26) is provided with a pin element (29) which can be passed through the slot (13) of the prolongation (12) and the slot (15, 16, 17) of the retaining element (14).

13. Latching device (100) according to any one of Claims 10 to 12, **characterized in that** the retaining element (14) includes a through-opening (19) and a retaining device (20) for a pin part (21) which can be loaded by a spring element (22), which pin part (21), in the unlocked and tilted-up state of the cab (K), can be passed through the through-opening (19) by means of the spring element (22) and can be brought into engagement with the slot (13) of the prolongation (12) in order to avoid undesired rotation of the shaft (1).

14. Latching element (100) according to Claim 13, **characterized in that** the latching device (100), in particular one of the engagement devices (4a, 4b), includes an abutment surface (24) fixed to the chassis structure against which the pin part (21) can be supported against the force of the spring element (22) in the locked state and which moves out of engagement therewith when the cab (K) is in the tilted-down state.

15. Latching device (100) according to any one of Claims 10 to 14, **characterized in that** the retaining element (14) is provided on one of its axial end sections with a support projection (18) which projects beyond the outer circumference of the retaining element (14) and serves to limit the swivelling of the lever arrangement (26) and/or to act as a support for the lever arrangement (26) while the lever arrangement (26) is being swivelled in order to make possible the axial displacement of the shaft (1).

16. Latching device (100) according to any one of Claims 10 to 15, **characterized in that** the lever arrangement (26) includes an elongated part (26') and a handle (26") and the elongated part (26') can be stowed in the prolongation (12) while the handle (26") remains freely accessible.

17. Latching device (100) according to any one of Claims 10 to 16, **characterized in that** at least two of the following are aligned coaxially, preferably telescoped together, at least in the locked state of the cab (K): the prolongation (12), the retaining element (14), the elongated part (26'), the shaft (1).

18. Latching device (100) according to any one of the preceding claims, **characterized in that** the latching device (100) includes a safety device which serves to secure the lever arrangement (26) against undesired outward movement when in the retracted stowage position.

19. Latching device (100) according to any one of the preceding claims, **characterized in that** the lever arrangement (26) is connected to the shaft (1) via a joint arrangement (G), the joint arrangement (G) serving to make it possible for the lever arrangement (26) to be rotated, swivelled and folded in and out.

20. Latching device (100) according to any one of the preceding claims, **characterized in that** the cab (K) can be moved to the tilted-up state manually, only by actuating the lever arrangement (26), preferably with the support of an assistance force device.

21. Commercial vehicle, preferably a truck, in particular a semitrailer tractor, having a tiltable cab (K) and a latching device (100) according to any one of the preceding claims.

## Revendications

1. Dispositif d'arrêt (100) pour le verrouillage et le déverrouillage d'une cabine basculante (K) pour un véhicule utilitaire présentant une structure de châssis (F), avec
- un arbre (1), qui s'étend de préférence essentiellement transversalement à la direction longitudinale du véhicule utilitaire, et
- un agencement de levier (26), qui sert pour actionner l'arbre (1) et qui est de préférence couplé mécaniquement à l'arbre (1),
dans lequel, par actionnement uniquement de l'agencement de levier (26), la cabine (K) peut être amenée dans un état rabattu et dans un état relevé et dans l'état rabattu elle peut en outre être déverrouillée et/ou verrouillée,
**caractérisé en ce que**
- dans l'état relevé de la cabine (K) la rotation de l'arbre (1) et dès lors de l'agencement de levier (26) est empêchée, et
- l'agencement de levier (26) peut prendre une position étendue, dans laquelle il peut être rabattu, tourner et/ou pivoter, et une position de rangement rentrée, dans laquelle il peut être rangé en dessous de la cabine (K), tandis que la poignée (26") reste librement accessible.

2. Dispositif d'arrêt (10) selon la revendication 1, **caractérisé en ce que** l'agencement de levier (26) sert pour la rotation et/ou le déplacement axial de l'arbre (1) et pour le basculement de la cabine (K).

3. Dispositif d'arrêt (100) selon la revendication 1 ou 2, **caractérisé en ce que** l'agencement de levier (26) peut tourner, pour faire tourner l'arbre (1), et peut pivoter, pour déplacer axialement l'arbre (1).

4. Dispositif d'arrêt (100) selon l'une quelconque des revendications précédentes, **caractérisé en ce que** l'arbre (1) est supporté dans deux consoles (2a, 2b) fixes sur la cabine.

5. Dispositif d'arrêt (100) selon la revendication 4, **caractérisé en ce que** l'arbre (1) présente deux cames (3a, 3b), qui sont disposées sur ou dans les consoles (2a, 2b) et qui peuvent être mises en prise et hors de prise avec des dispositifs d'engagement (4a, 4b) fixes sur la structure de châssis par la rotation de l'arbre (1).

6. Dispositif d'arrêt (100) selon la revendication 5, **caractérisé en ce que** les dispositifs d'engagement (4a, 4b) sont chacun dotés d'un contour (5a, 5b), qui est réalisé de telle manière qu'au début du processus de verrouillage les cames (3a, 3b) puissent glisser le long d'une rampe d'entrée, une contrainte pouvant ainsi être produite entre les consoles (2a, 2b) et les dispositifs d'engagement (4a, 4b) au moyen d'appuis élastiques (7a, 7b).

7. Dispositif d'arrêt (100) selon la revendication 6, **caractérisé en ce que** le contour (5a, 5b) est réalisé de telle manière qu'à la fin du processus de verrouillage la contrainte puisse être au moins légèrement libérée.

8. Dispositif d'arrêt (100) selon l'une quelconque des revendications précédentes, **caractérisé en ce que** l'arbre (1) est doté d'un moyen de ressort (8) et l'arbre (1) est déplaçable axialement contre le moyen de ressort (8).

9. Dispositif d'arrêt (100) selon l'une quelconque des revendications précédentes, **caractérisé en ce que** l'arbre (1) présente une partie d'extrémité (9), qui est disposée à l'extrémité de l'arbre (1) opposée à l'agencement de levier (26) et qui peut lors du rabattement de la cabine (K) glisser le long d'une face d'entrée (10) sur un des dispositifs d'engagement (4a, 4b) et/ou qui peut être verrouillée à la fin du processus de rabattement à un des dispositifs d'engagement (4a, 4b), de préférence sous l'action du moyen de ressort (8).

10. Dispositif d'arrêt (100) selon l'une quelconque des revendications précédentes, **caractérisé en ce que** l'arbre (1) présente à son extrémité tournée vers l'agencement de levier (26) un prolongement (12), qui est logé de façon tournante et coulissante dans un élément de retenue (14) fixe sur la cabine et qui est relié mécaniquement à l'agencement de levier (26).

11. Dispositif d'arrêt (100) selon la revendication 10, **caractérisé en ce que** le prolongement (12) présente une fente (13), qui s'étend essentiellement axialement, et l'élément de retenue (14) présente une fente (15, 16, 17), qui comprend une première partie de fente (15) s'étendant essentiellement axialement, une deuxième partie de fente (16) s'étendant en oblique ou essentiellement radialement et une troisième partie de fente (17) s'étendant essentiellement axialement.

12. Dispositif d'arrêt (100) selon la revendication 11, **caractérisé en ce que** l'agencement de levier (26) est pourvu d'un élément de boulon (29), qui peut passer à travers la fente (13) du prolongement (12) et à travers la fente (15, 16, 17) de l'élément de retenue (14).

13. Dispositif d'arrêt (100) selon l'une quelconque des revendications 10 à 12, **caractérisé en ce que** l'élément de retenue (14) comprend une ouverture de passage (19) et un dispositif de retenue (20) pour une partie de boulon (21) pouvant être chargée par un élément de ressort (22), qui dans l'état déverrouillé et relevé de la cabine (K) peut passer à travers l'ouverture de passage (19) au moyen de l'élément de ressort (22) et qui peut être mise en prise avec la fente (13) du prolongement (12), afin d'éviter une rotation involontaire de l'arbre (1).

14. Dispositif d'arrêt (100) selon la revendication 13, **caractérisé en ce que** le dispositif d'arrêt (100), en particulier un des dispositifs d'engagement (4a, 4b), comprend une face d'appui (24) fixe sur la structure de châssis, sur laquelle la partie de boulon (21) peut s'appuyer dans l'état verrouillé contre la force de l'élément de ressort (22) et quitte cet engagement lorsque la cabine (K) se trouve dans l'état rabattu.

15. Dispositif d'arrêt (100) selon l'une quelconque des revendications 10 à 14, **caractérisé en ce que** l'élément de retenue (14) est muni, à une de ses parties d'extrémité axiales, d'un nez d'appui (18), qui dépasse le pourtour extérieur de l'élément de retenue (14), et qui sert à limiter le pivotement de l'agencement de levier (26) et/ou à agir comme appui pour l'agencement de levier (26) pendant le pivotement de l'agencement de levier (26), afin de permettre le déplacement axial de l'arbre (1).

16. Dispositif d'arrêt (100) selon l'une quelconque des revendications 10 à 15, **caractérisé en ce que** l'agencement de levier (26) comprend une partie allongée (26') et une poignée (26") et la partie allongée (26') peut être rangée dans le prolongement (12), tandis que la poignée (26") reste librement accessible.

17. Dispositif d'arrêt (100) selon l'une quelconque des revendications 10 à 16, **caractérisé en ce qu'**au moins deux des éléments suivants sont orientés axialement au moins dans l'état verrouillé de la cabine (K), et sont de préférence glissés l'un dans l'autre: le prolongement (12), l'élément de retenue (14), la partie allongée (26'), l'arbre (1).

18. Dispositif d'arrêt (100) selon l'une quelconque des revendications précédentes, **caractérisé en ce que** le dispositif d'arrêt (100) comprend un dispositif de sécurité, qui sert à caler l'agencement de levier (26) dans la position de rangement rentrée contre une sortie involontaire.

19. Dispositif d'arrêt (100) selon l'une quelconque des revendications précédentes, **caractérisé en ce que** l'agencement de levier (26) est relié à l'arbre (1) par un dispositif articulé (G), dans lequel le dispositif articulé (G) sert à permettre une rotation, un basculement et/ou un engagement et un dégagement de l'agencement de levier (26).

20. Dispositif d'arrêt (100) selon l'une quelconque des revendications précédentes, **caractérisé en ce que** la cabine (K) peut être amenée manuellement dans la position relevée uniquement par l'actionnement de l'agencement de levier (26), de préférence avec le soutien d'un dispositif de force auxiliaire.

21. Véhicule utilitaire, de préférence camion, en particulier tracteur de semi-remorque, avec une cabine basculante (K) et un dispositif d'arrêt (100) selon l'une quelconque des revendications précédentes.
